(19) Europäisches Patentamt
European Patent Office
Office européen des brevets

(11) **EP 2 334 081 A1**

(12) **EUROPEAN PATENT APPLICATION**
published in accordance with Art. 153(4) EPC

(43) Date of publication:
**15.06.2011 Bulletin 2011/24**

(21) Application number: **09817890.8**

(22) Date of filing: **02.10.2009**

(51) Int Cl.:
***H04N 7/32*** (2006.01)

(86) International application number:
**PCT/JP2009/067225**

(87) International publication number:
**WO 2010/038858 (08.04.2010 Gazette 2010/14)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **03.10.2008 JP 2008258009**

(71) Applicant: **Sony Corporation**
**Tokyo 108-0075 (JP)**

(72) Inventors:
- **KONDO Kenji**
  **Tokyo 108-0075 (JP)**
- **TANAKA Junichi**
  **Tokyo 108-0075 (JP)**

(74) Representative: **Körber, Martin Hans**
**Mitscherlich & Partner**
**Patent- und Rechtsanwälte**
**Sonnenstraße 33**
**80331 München (DE)**

(54) **IMAGE PROCESSING DEVICE AND METHOD**

(57)    The present invention relates to an image processing apparatus and method in which, in a case where an AIF is employed in motion compensation, the number of calculations for motion vectors is restricted, whereby the load of encoding processing can be reduced.

In step S11, a motion vector calculator selects one of the calculated filter coefficients stored in a memory. In step S12, the motion vector calculator calculates a motion vector of each macroblock of an encoding target image by using interpolation pixels which are interpolated with a fraction precision by an AIR using the selected calculated filter coefficient. In step S13, the motion vector calculator calculates the filter coefficient for the encoding target image by using the calculated motion vector so that the prediction error becomes minimum. The calculated filter coefficient is supplied to the memory and is stored therein, and is used for calculating the motion vector for the subsequent image. The present invention can be applied to an image encoding apparatus.

FIG. 5

```
┌────────────────────────────────────────┐
│  START PROCESSING FOR DETERMINING       │
│   FILTER COEFFICIENT OF AIF AND MV      │
└────────────────────────────────────────┘
                  │
                  ▼
┌────────────────────────────────────────┐
│  SELECT CALCULATED FILTER COEFFICIENT   │ S11
└────────────────────────────────────────┘
                  │
                  ▼
┌────────────────────────────────────────┐
│      CALCULATE MOTION VECTOR BY         │ S12
│    USING SELECTED FILTER COEFFICIENT    │
└────────────────────────────────────────┘
                  │
                  ▼
┌────────────────────────────────────────┐
│     CALCULATE FILTER COEFFICIENT BY     │ S13
│ USING CALCULATED MOTION VECTOR SO THAT  │
│  PREDICTION ERROR BECOMES MINIMUM       │
└────────────────────────────────────────┘
                  │
                  ▼
              ┌───────┐
              │  END  │
              └───────┘
```

EP 2 334 081 A1

## Description

Technical Field

The present invention relates to image processing apparatuses and methods, and more particularly, to an image processing apparatus and method that can reduce the amount of processing when an adaptive interpolation filter is used for motion compensation in image-compression-encoding processing.

Background Art

Conventionally, as techniques for compression-encoding moving images, MPEG, H.26x, etc. using orthogonal transform, such as discrete cosine transform, and motion compensation are known.

MPEG2 is defined as a general-purpose image encoding method. MPEG2 is now widely used for a wide range of applications for professional use and for consumer use, as a technique that can support both the interlaced scanning images and progressive scanning images and that support both the standard-definition images and high-definition images and also standard specifications.

By the use of MPEG2, an amount of encoding (bit rate) of 4 to 8 Mbps are applied to, for example, interlaced scanning images having standard definition of 720x480 pixels, and an amount of encoding (bit rate) of 18 to 22 Mbps are applied to, for example, interlaced scanning images having high definition of 1920x1088 pixels, thereby making it possible to realize a high compression ratio and good image quality.

On the other hand, H.26x was initially developed as an image encoding technique for videoconferencing. For example, H26L requires a larger amount of calculation for performing encoding and decoding than MPEG2 or MPEG4. However, H.26L is known to achieve a higher coding efficiency.

Also, as a part of the activities in MPEG4, standardization of a technique for realizing a higher coding efficiency is performed based on H.26L and also by incorporating functions that are not supported by H.26L. Such a technique is standardized as H.264 or MPEG-4 Part10 (Advanced Video Coding). This standardization is hereinafter referred to as the "AVC standards".

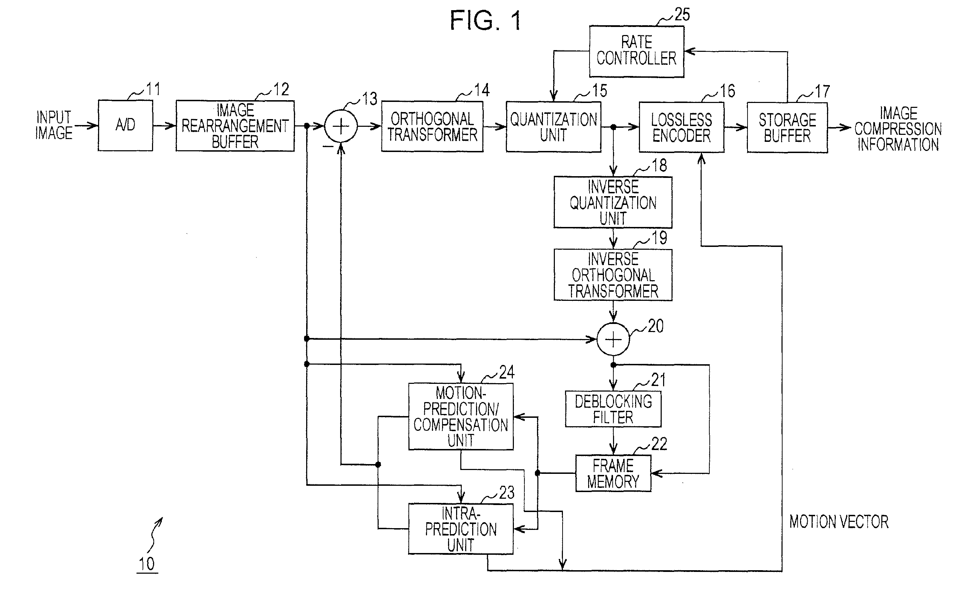

Fig. 1 illustrates an example of the configuration of an image encoding apparatus that performs compression-encoding on input moving images on the basis of the AVC standards and outputs image compression information (encoded signal) obtained as a result of compression-encoding.

This image encoding apparatus 10 includes an analog-to-digital converter (A/D) 11, an image rearrangement buffer 12, an adder 13, an orthogonal transformer 14, a quantization unit 15, a lossless encoder 16, a storage buffer 17, and a rate controller 25. The image encoding apparatus 10 further includes an inverse quantization unit 18, an inverse orthogonal transformer 19, an adder 20, a deblocking filter 21, a frame memory 22, an intra-prediction unit 23, and a motion-prediction/compensation unit 24.

In the image encoding apparatus 10, a moving image input as an encoding target (hereinafter referred to as an "input image") is converted into a digital signal by the A/D 11, and is input into the image rearrangement buffer 12. In the image rearrangement buffer 12, the order of pictures is rearranged in accordance with a GOP (Group of Pictures) structure used when the image is output, and the resulting image is supplied to the subsequent block.

If the image output from the image rearrangement buffer 12 is subjected to intra-coding, the pixel values of the encoding target image and the pixel values of a prediction image subjected to intra-prediction in the intra-prediction unit 23 are supplied to the adder 13, and a difference value between these pixel values is calculated and is output to the orthogonal transformer 14.

In the orthogonal transformer 14, the output from the adder 13 is subjected to orthogonal transform (discrete cosine transform, Karhunen-Loeve transform, or the like), and a transform coefficient obtained as a result of orthogonal transform is quantized by the quantization unit 15. Note that the quantization rate used in the quantization unit 15 is controlled by the rate controller 25 in accordance with the storage capacity of the storage buffer 17. The quantized transform coefficient is supplied to the lossless encoder 16 and the inverse quantization unit 18.

In the lossless encoder 16, the quantized transform coefficient is subjected to lossless encoding (variable length coding, arithmetic coding, or the like), and the result is stored in the storage buffer 17 and is then output to the subsequent block as image compression information.

Meanwhile, in the inverse quantization unit 18, the quantized transform coefficient is subjected to inverse quantization, which corresponds to the quantization performed by the quantization unit 15, and is output to the inverse orthogonal transformer 19. In the inverse orthogonal transformer 19, inverse orthogonal transform, which corresponds to the orthogonal transform performed by the orthogonal transformer 14, is performed on the transform coefficient obtained as a result of inverse quantization. The result is then output to the adder 20.

In the adder 20, the inverse orthogonal transform result and the encoding target image are added so that a decoded image, which is an image obtained by encoding the encoding target image and by decoding it, is generated.

The deblocking filter 21 removes blocking distortions from the generated decoded image, and then, the resulting image is stored in the frame memory 22.

In the intra-prediction unit 23, information indicating an intra-prediction mode applied to each macroblock of the encoding target image is output to the lossless encoder 16. This information indicating the intra-prediction mode is encoded by the lossless encoder 16 as part of information described in the header of image compression information.

Note that in the case of H.264, as the intra-prediction modes, an intra 4x4 prediction mode, an intra 8x8 prediction mode, and an intra 16x16 prediction mode are defined for luminance signals. For color-difference signals, a prediction mode, which is independent of the prediction modes for the luminance signals, can be defined for each macroblock. For example, concerning the intra 4x4 prediction mode, one intra-prediction mode is defined for each 4x4 luminance block. Concerning the intra 8x8 prediction mode, one intra-prediction mode is defined for each 8x8 luminance block. Concerning the intra 16x16 prediction mode, one intra-prediction mode is defined for each macroblock. Also, for color difference signals, one prediction mode is defined for each macroblock.

If the image output from the image rearrangement buffer 12 is subjected to inter-coding, the encoding target image is input into the motion-prediction/compensation unit 24.

At the same time, a decoded image output from the frame memory 22 is read out to the motion-prediction/compensation unit 24 as a reference image. Then, motion-prediction/compensation is performed on the encoding target image and the reference image, and a prediction image obtained as a result of motion-prediction/compensation is supplied to the adder 13. In the adder 13, the prediction image is converted into a difference signal between the encoding target image and the prediction image, and the difference signal is output to the orthogonal transformer 14. Operations performed by the blocks subsequent to the orthogonal transformer 14 are similar to those for intra-coding, and thus, an explanation thereof is omitted.

In the motion-prediction/compensation unit 24, simultaneously with the generation of the above-described prediction image, a motion vector of each macroblock is detected and is output to the lossless encoder 16. This motion vector is encoded by the lossless encoder 16 as part of information described in the header of image compression information.

Here, motion compensation performed in the motion-prediction/compensation unit 24 is described. Motion compensation is processing performed by assigning a portion of a reconstructed image stored in the frame memory 22 to a portion of an encoding target image. A motion vector detected by the motion-prediction/compensation unit 24 represents which portion of the reconstructed image is used for reference.

In order to improve the prediction precision, the motion vector is calculated, in most cases, with a precision using fractions, which are smaller than integers, such as 1/2 Pel, 1/4 Pel, and so on. In this manner, in order to perform motion compensation with a fraction precision, it is necessary to newly set pixels between actual pixels of an image, i.e., at a position in which pixels do not exist, by interpolation processing.

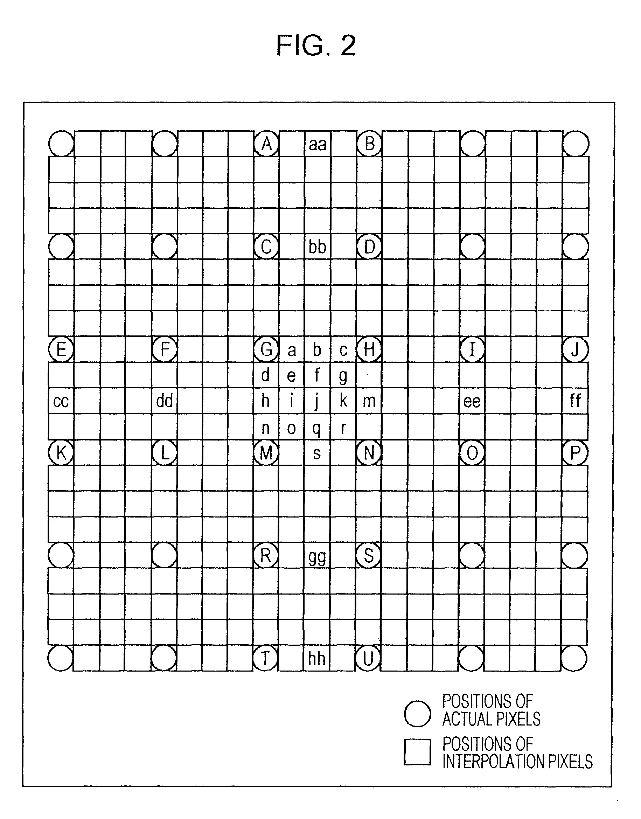

An example of the case where the number of pixels is increased by interpolation is described below with reference to Fig. 2. Fig. 2 illustrates an example of the case where the number of pixels is increased in each of the vertical direction and in the horizontal direction to four times of the original number of pixels. In Fig. 2, the white circles represent the positions of actual pixels, and the white squares represent the positions of interpolation pixels.

Each interpolation pixel is interpolation-calculated by linear combination of a plurality of actual pixels, calculated interpolation pixels, and a predetermined filter coefficient, as expressed by, for example, the following interpolation equations.

$$b = (E-5F+20G+20H-5I+J)/32$$

$$h = (A-5C+20G+20M-5R+T)/32$$

$$j = (aa-5bb+20b+20s-5gg+hh)/32$$

$$a = (G+b)/2$$

$$d = (G+h)/2$$

$$f = (b+j)/2$$

$$r = (m+s)/2$$

Interpolation pixels aa, bb, s, gg, and hh are calculated by equations similar to the above-described equation for calculating the interpolation pixel b. Interpolation pixels cc, dd, m, ee, and ff are calculated by equations similar to the above-described equation for calculating the interpolation pixel h. Interpolation pixel c is calculated by an equation similar to the above-described equation for calculating the interpolation pixel a. Interpolation pixels i, k, and q are calculated by equations similar to the above-described equation for calculating the interpolation pixel d. Interpolation pixels e, g, and o are calculated by equations similar to the above-described equation for calculating the interpolation pixel r.

Note that the above-described interpolation equations are employed in, for example, H.264 and AVC standards. These interpolation equations are realized by a FIR (Finite Impulse Response) filter having an even-numbered tap.

Incidentally, the following technique has been proposed (for example, see NPL 1 and NPL 2). Instead of a FIR filter, an Adaptive Interpolation Filter (hereinafter referred to as an "AIF") that can adaptively change a filter coefficient in an interpolation equation for every frame is used to perform interpolation processing. This makes it possible to reduce aliasing influences or encoding distortions, thereby decreasing motion compensation errors.

Citation List

Non Patent Literature

NPL 1: "Motion- and Aliasing-Compensated Prediction for Hybrid Video Coding" Thomas Wedi and Hans Georg Musmann, IEEE Transactions on circuits and systems for video technology, Vol.13, No.7, July 2003
NPL 2: "Prediction of P- and B-Frames Using a Two-dimensional Non-separable Adaptive Wiener Interpolation Filter for H.264/AVC" Yuri Vatis, Joern Ostermann, ITU-T SG16 VCEG 30th Meeting, Hangzhou China, October 2006

Summary of Invention

Technical Problem

The problem that may arise due to the use of the above-described AIF for motion compensation is an increase in the amount of processing. That is, in order to calculate a motion vector of each macroblock within a frame, an interpolation result obtained by the use of an AIF using a filter coefficient suitable for that frame is required, and a motion vector is required for calculating the filter coefficient of the AIF.

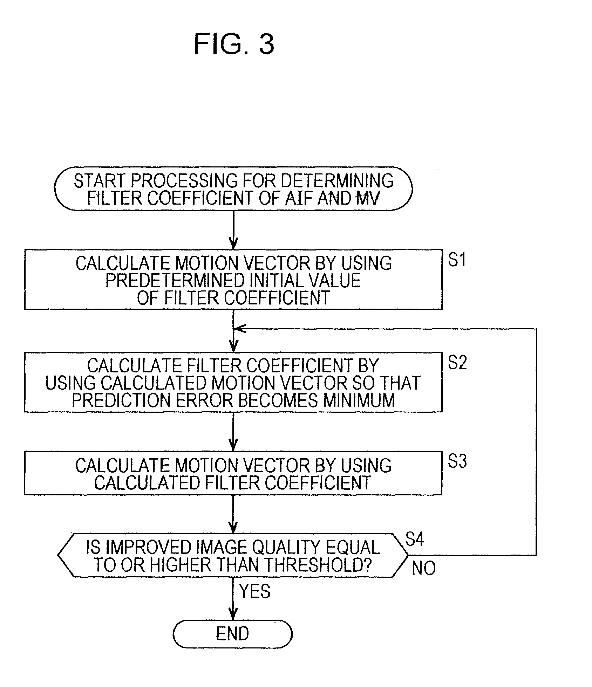

In this manner, since there is a correlation between motion vectors and filter coefficients of an AIF, the motion vector and the filter coefficient of the AIF are conventionally determined, for example, as shown in Fig. 3. Fig. 3 is a flowchart illustrating processing for determining the motion vector of each macroblock within a frame and the filter coefficient of the AIF suitable for that frame.

In step S1, interpolations of pixels are performed with a fraction precision by the use of an AIF using the predetermined initial value of a filter coefficient. By using this interpolation result, the motion vector for each macroblock is calculated. Then, in step S2, the filter coefficient is calculated by using the motion vector obtained in step S1 so that the prediction error becomes minimum. In step S3, interpolations of pixels are performed with a fraction precision by the use of the AIF using the filter coefficient obtained in step S2. By the use of this interpolation result, the motion vector of each macroblock is calculated again.

In step S4, it is determined whether the value indicating the improved image quality when the filter coefficient obtained in step S2 and the motion vector obtained in step S3 are used is equal to or higher than a predetermined threshold. Step S2 and the following steps are repeated until the above-described value becomes equal to or higher than the predetermined threshold. Then, if it is determined in step S4 that the value indicating the improved image quality is equal to or higher than the predetermined threshold, the filter coefficient obtained in step S2 and the motion vector obtained in step S3, which have been obtained immediately after step S4, are used. Note that processing in step S4 may be omitted.

As discussed, in the known processing for determining the motion vector and the filter coefficient of the AIF, it is necessary to execute processing for calculating motion vectors at least twice (step S1 and step S3). As described above, if motion vectors are calculated with a fraction precision, the amount of calculation is increased significantly. Thus, if processing for calculating motion vectors is executed with a fraction precision twice or more, the load of encoding processing becomes large.

The present invention has been made in view of the above-described background, and makes it possible to reduce the encoding processing load by restricting the number of calculations of motion vectors when an AIF is used in motion compensation.

Solution to Problem

An image processing apparatus according to one aspect of the present invention is an image processing apparatus for performing inter-prediction processing on an encoding target image. The image processing apparatus includes: selection means for selecting a filter coefficient of an interpolation filter calculated based on a motion vector obtained by being calculated by using a result of interpolation performed by the interpolation filter, the interpolation filter interpolating, with a fraction precision, pixels of the encoding target image and pixels of a prediction image used for the inter-prediction processing; motion vector calculation means for calculating a motion vector of the encoding target image by using a result of interpolation performed by the interpolation filter using the filter coefficient selected by the selection means; and coefficient calculation means for calculating a filter coefficient of the interpolation filter for the encoding target image by using the motion vector calculated by the motion vector calculation means.

The selection means may select the filter coefficient in accordance with a positional relationship between the encoding target image and the prediction image.

The selection means may select the filter coefficient for an image which is positioned temporally closest to the encoding target image.

The selection means may select the filter coefficient in accordance with the type of picture of the encoding target image or the prediction image.

The image processing apparatus may further include storage means for storing the filter coefficient of the interpolation filter calculated based on the motion vector obtained by being calculated by using the interpolation result of the interpolation filter, the interpolation filter interpolating the pixels of the encoding target image and the pixels of the prediction image obtained by the inter-prediction processing. The selection means may select the filter coefficient stored in the storage means.

An image processing method according to one aspect of the present invention is an image processing method for an image processing apparatus for performing inter-prediction processing on an encoding target image. The image processing method includes: selecting a filter coefficient of an interpolation filter calculated based on a motion vector obtained by being calculated by using a result of interpolation performed by the interpolation filter, the interpolation filter interpolating, with a fraction precision, pixels of the encoding target image and pixels of a prediction image used for the inter-prediction processing; calculating a motion vector of the encoding target image by using a result of interpolation performed by the interpolation filter using the selected filter coefficient; and calculating a filter coefficient of the interpolation filter for the encoding target image by using the calculated motion vector.

In one aspect of the present invention, a filter coefficient of an interpolation filter calculated based on a motion vector obtained by being calculated by using a result of interpolation performed by the interpolation filter, the interpolation filter interpolating, with a fraction precision, pixels of the encoding target image and pixels of a prediction image used for the inter-prediction processing, is selected. A motion vector of the encoding target image is calculated by using a result of interpolation performed by the interpolation filter using the selected filter coefficient. A filter coefficient of the interpolation filter for the encoding target image is calculated by using the calculated motion vector.

Advantageous Effects of Invention

According to one aspect of the present invention, in a case where an AIF is employed in motion compensation, the number of calculations for motion vectors is restricted, whereby the load of encoding processing can be reduced.

Brief Description of Drawings

[Fig. 1] Fig. 1 is a block diagram illustrating an example of the configuration of a known image encoding apparatus.

[Fig. 2] Fig. 2 illustrates interpolations of pixels.

[Fig. 3] Fig. 3 is a flowchart illustrating known processing for calculating a motion vector and a filter coefficient.

[Fig. 4] Fig. 4 is a block diagram illustrating an example of the configuration of an image encoding apparatus to which the present invention is applied.

[Fig. 5] Fig. 5 is a flowchart illustrating processing for calculating a motion vector and a filter coefficient by an image encoding apparatus to which the present invention is applied.

[Fig. 6] Fig. 6 is a block diagram illustrating an example of the major configuration of a television receiver to which the present invention is applied.

[Fig. 7] Fig. 7 is a block diagram illustrating an example of the major configuration of a cellular telephone to which the present invention is applied.

[Fig. 8] Fig. 8 is a block diagram illustrating an example of the major configuration of a hard disk recorder to which the present invention is applied.

[Fig. 9] Fig. 9 is a block diagram illustrating an example of the major configuration of a camera to which the present invention is applied.

[Fig. 10] Fig. 10 illustrates examples of sizes of a macroblock.

Description of Embodiments

A detailed description of specific embodiments to which the present invention is applied is given below with reference to the drawings.

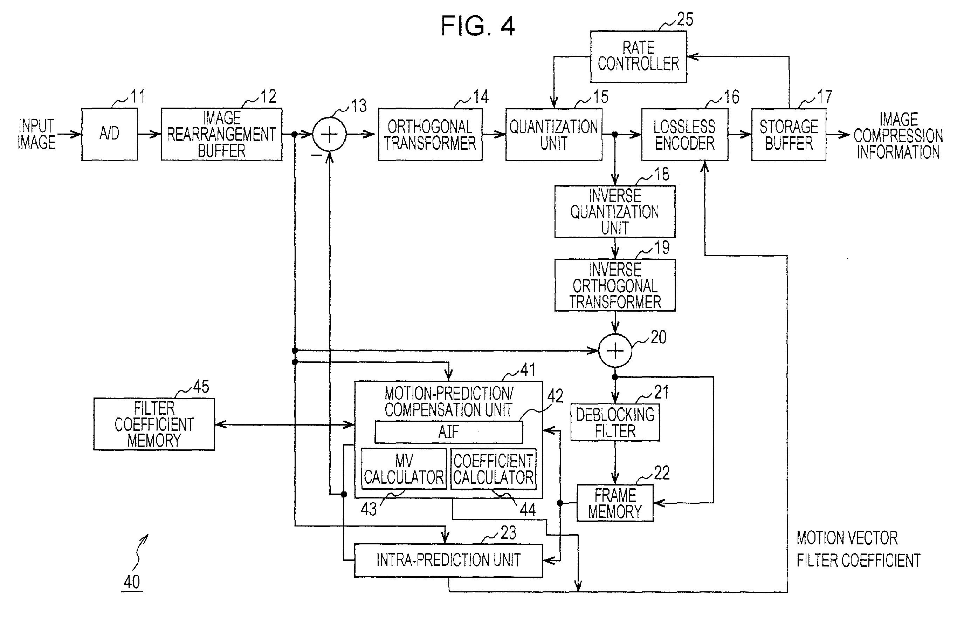

Fig. 4 illustrates an example of the configuration of an image encoding apparatus, which is an embodiment of the present invention. This image encoding apparatus 40 performs compression-encoding on a moving image to be input (hereinafter referred to as an "input image"), and outputs image compression information obtained as a result of compression-encoding. Also, since an AIF is employed for motion compensation, the filter coefficient of the AIF is contained in output image compression information.

The image encoding apparatus 40 differs from the image encoding apparatus 10 shown in Fig. 1 in that a motion-prediction/compensation unit 41 is provided instead of the motion-prediction/compensation unit 24 of the image encoding apparatus 10 shown in Fig. 1 and in that a filter coefficient memory 45 for storing the filter coefficient of the AIF calculated in the motion-prediction/compensation unit 24 is provided. The elements other than the motion-prediction/compensation unit 41 are the same as those of the image encoding apparatus 10 shown in Fig. 1, and are designated by like reference numerals. Thus, an explanation thereof is omitted if it is not necessary.

The motion-prediction/compensation unit 41 contains an AIF 42, a motion vector calculator 43, and a coefficient calculator 44. In motion compensation processing, the motion vector calculator 43 calculates the motion vector of each macroblock based on the filter coefficient of the AIF. The coefficient calculator 44 calculates the filter coefficient of the AIF for an encoding target image based on the motion vector calculated for each macroblock. The filter coefficient of the AIF calculated by the coefficient calculator 44 is supplied to the filter coefficient memory 45 and is stored therein, and is used for calculating the motion vector for the subsequent frame. Note that the filter coefficient memory 45 may be contained in the motion-prediction/compensation unit 41.

Next, the operation of the image encoding apparatus 40 is described.

In the image encoding apparatus 40, an input image is converted into a digital signal by the A/D 11, and is input into the image rearrangement buffer 12. In the image rearrangement buffer 12, the order of pictures is rearranged in accordance with the GOP structure when the image is output, and then, the resulting image is supplied to the subsequent block.

If the image output from the image rearrangement buffer 12 is subjected to intra-coding, the pixel values of the encoding target image and the pixel values of a prediction image subjected to intra-prediction in the intra-prediction unit 23 are supplied to the adder 13, and a difference value between these pixel values is calculated and is output to the orthogonal transformer 14.

The output from the adder 13 is subjected to orthogonal transform (discrete transform, Karhunen-Loeve transform, or the like) by the orthogonal transformer 14, and a transform coefficient obtained as a result of orthogonal transform is quantized by the quantization unit 15. The quantized transform coefficient is supplied to the lossless encoder 16 and the inverse quantization unit 18.

In the lossless encoder 16, the quantized transform coefficient is subjected to lossless encoding (variable length coding, arithmetic coding, or the like), and the result is stored in the storage buffer 17 and is then output to the subsequent block as image compression information.

Meanwhile, in the inverse quantization unit 18, the quantized transform coefficient is subjected to inverse quantization, which corresponds to the quantization performed by the quantization unit 15, and is output to the inverse orthogonal transformer 19. In the inverse orthogonal transformer 19, inverse orthogonal transform, which corresponds to the orthogonal transform performed by the orthogonal transformer 14, is performed on the transform coefficient obtained as a result of inverse quantization. The result is then output to the adder 20.

In the adder 20, the inverse orthogonal transform result and the encoding target image are added so that a decoded image, which is an image obtained by encoding the encoding target image and by decoding it, is generated. The deblocking filter 21 removes blocking distortions from the generated decoded image, and then, the resulting image is stored in the frame memory 22.

In the intra-prediction unit 23, information indicating an intra-prediction mode applied to each macroblock of the encoding target image is output to the lossless encoder 16. This information indicating the intra-prediction mode is encoded by the lossless encoder 16 as part of information described in the header of image compression information.

If the image output from the image rearrangement buffer 12 is subjected to inter-coding, the encoding target image is input into the motion-prediction/compensation unit 41.

At the same time, a decoded image output from the frame memory 22 is read into the motion-prediction/compensation unit 41 as a reference image. Then, motion-prediction/compensation is performed on the encoding target image and the reference image, and a prediction image obtained as a result of motion-prediction/compensation is supplied to the adder 13. In the adder 13, the prediction image is converted into a difference signal between the encoding target image and the prediction image, and the difference signal is output to the orthogonal transformer 14. Operations performed by the blocks subsequent to the orthogonal transformer 14 are similar to those for intra-coding, and thus, an explanation thereof is omitted.

In the motion-prediction/compensation unit 41, when generating the above-described prediction image, a motion vector of each macroblock of an encoding target image is calculated with a fraction precision by the motion vector calculator 43, and also, the filter coefficient of the AIF for the encoding target image is calculated by the coefficient calculator 44, and the motion vector and the filter coefficient are output to the lossless encoder 16. These motion vector and filter coefficient of the AIF are encoded by the lossless encoder 16 as part of information described in the header of image compression information. The filter coefficient of the AIF calculated by the coefficient calculator 44 is also supplied to the filter coefficient memory 45 and is stored therein.

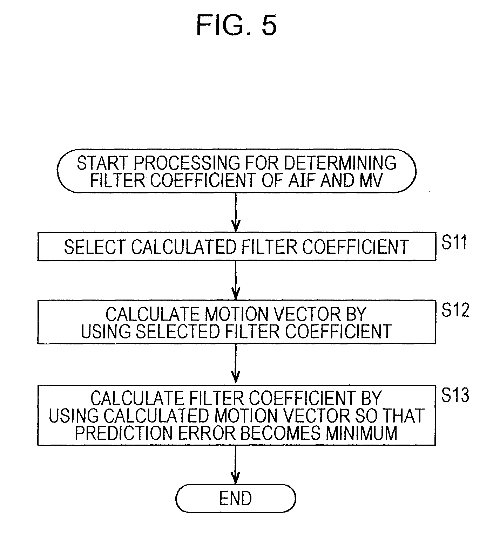

Here, processing for calculating the motion vector and the filter coefficient of the AIF by the motion-prediction/compensation unit 41 is described below with reference to the flowchart of Fig. 5.

In step S11, the motion vector calculator 43 selects one of the calculated filter coefficients stored in the filter coefficient memory 45. In this selection, the filter coefficient calculated for the image which is temporally closest to an encoding target image is selected. That is, this selection is based on the assumption that the optimal filter coefficient for an encoding target image is similar to the filter coefficient calculated for the image which is temporally closest to the encoding target image.

However, if there is no calculated filter coefficient stored in the filter coefficient memory 45, or if there is a large difference between an encoding target image and the image for which the filter coefficient has been calculated and stored in the filter coefficient memory 45, because, for example, there is a scene change between the two images, the preset initial value of a filter coefficient is selected.

Alternatively, in this selection, the filter coefficient calculated for the image which is temporally closest to the encoding target image and also whose picture type is the same as the picture type of an encoding target image may be selected.

In step S12, the motion vector calculator 43 calculates the motion vector of each macroblock of the encoding target image by using interpolation pixels which are interpolated with a fraction precision by the AIF 42 using the filter coefficient selected in step S11.

In step S13, the motion vector calculator 43 calculates the filter coefficient for the encoding target image by using the motion vector calculated in step S12 so that the prediction error becomes minimum. The calculated filter coefficient is output to the lossless encoder 16 together with the motion vector. Also, the calculated filter coefficient is supplied to the filter coefficient memory 45 and is stored therein, and is used for calculating the motion vector for the subsequent image.

As discussed above, with the processing for calculating the motion vector and the filter coefficient of the AIF by the motion-prediction/compensation unit 41 of the image encoding apparatus 40 of the present invention, the number of calculations for the motion vector with a fraction precision, which requires relatively a large amount of calculation, is restricted to once, thereby making it possible to reduce the load of encoding processing.

In the present invention, by focusing the fact that the filter coefficients calculated for frames positioned close to each other on the time axis are similar (having high correlation), when performing inter-prediction, the filter coefficient calculated in the past for a filter having a close positional relationship is stored (first pass), and the stored filter coefficient is reused (second pass). This makes it possible to omit the calculation for a filter coefficient in the first pass (the filter coefficient can be calculated only by the second pass).

Note that a threshold value may be provided for the positional relationship, and the filter coefficient can be reused only for the frame whose time-axis distance is within the threshold value. Alternatively, it may be adaptively determined whether the filter coefficient is reused in accordance with the type of picture of an encoding target image or the above-described prediction image.

Also, concerning the filter coefficient to be selected, the filter coefficient calculated for the image which is temporally closest to an encoding target image is selected. Accordingly, it can be expected that the suitable motion vector is calculated.

Incidentally, the above-described image encoding apparatus 40 can be executed by hardware or software. If it is executed by software, a program forming that software is installed from a program recording medium into a computer built in dedicated hardware or a computer, for example, a general-purpose computer, that can execute various functions by installing various programs into that general-purpose computer.

The program to be executed by a computer may be a program that is executed in chronological order, as in the order described in this specification, or may be a program that is executed in parallel or a program that is executed when necessary, for example, when the program is called.

In addition, the program may be processed by a single computer, or may be executed by distributed processing by using a plurality of computers. Further, the program may be transferred to a remote computer and executed.

Embodiments of the present invention are not restricted to the above-described embodiments, and various modifications may be made without departing from the gist of the present invention.

For example, the above-described image encoding apparatus 40 may be applied to a certain electronic apparatus. An example of such an application is described below.

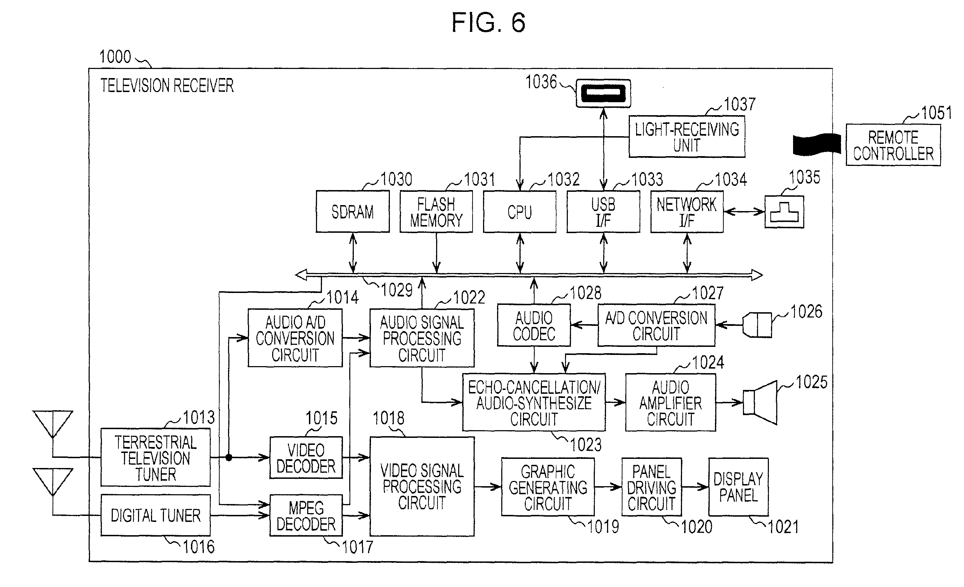

Fig. 6 is a block diagram illustrating an example of the configuration of a television receiver.

A television receiver 1000 shown in Fig. 6 includes a terrestrial television tuner 1013, a video decoder 1015, a video signal processing circuit 1018, a graphic generating circuit 1019, a panel driving circuit 1020, and a display panel 1021.

The terrestrial television tuner 1013 receives an analog terrestrial broadcasting wave signal via an antenna and demodulates the signal so as to obtain a video signal. The terrestrial television tuner 1013 supplies the video signal to the video decoder 1015. The video decoder 1015 performs decoding processing on the video signal supplied from the terrestrial television tuner 1013 so as to obtain a digital component signal. The video decoder 1015 then supplies the digital component signal to the video signal processing circuit 1018.

The video signal processing circuit 1018 performs predetermined processing, such as noise elimination, on the video data supplied from the video decoder 1015, and supplies the obtained video data to the graphic generating circuit 1019.

The graphic generating circuit 1019 generates video data of a program to be displayed on the display panel 1021 or image data by performing processing based on an application supplied via a network, and supplies the generated video data or image data to the panel driving circuit 1020. The graphic generating circuit 1019 performs processing as necessary. For example, the graphic generating circuit 1019 generates video data (graphic) for displaying screens to be used by a user for selecting items, and superposes the generated video data on program video data, and then supplies the video data obtained as a result of superposition to the panel driving circuit 1020.

The panel driving circuit 1020 drives the display panel 1021 on the basis of the data supplied from the graphic generating circuit 1019, and displays program images or the above-described various screens on the display panel 1021.

The display panel 1021 is formed of, for example, an LCD (Liquid Crystal Display), and displays program images under the control of the panel driving circuit 1020.

The television receiver 1000 also includes an audio A/D (Analog/Digital) conversion circuit 1014, an audio signal processing circuit 1022, an echo-cancellation/audio-synthesize circuit 1023, an audio amplifier circuit 1024, and a speaker 1025.

The terrestrial television tuner 1013 obtains an audio signal as well as a video signal by demodulating a received broadcasting wave signal. The terrestrial television tuner 1013 supplies the obtained audio signal to the audio A/D conversion circuit 1014.

The audio A/D conversion circuit 1014 performs A/D conversion processing on the audio signal supplied from the terrestrial television tuner 1013, and supplies an obtained digital audio signal to the audio signal processing circuit 1022.

The audio signal processing circuit 1022 performs predetermined processing, such as noise elimination, on the audio data supplied from the audio A/D conversion circuit 1014, and supplies obtained audio data to the echo-cancellation/audio-synthesize circuit 1023.

The echo-cancellation/audio-synthesize circuit 1023 supplies audio data supplied from the audio signal processing circuit 1022 to the audio amplifier circuit 1024.

The audio amplifier circuit 1024 performs D/A conversion processing and amplifying processing on the audio data supplied from the echo-cancellation/audio-synthesize circuit 1023 so as to adjust the volume of the audio data to a predetermined sound volume. The audio amplifier circuit 1024 then outputs the audio data from the speaker 1025.

The television receiver 1000 also includes a digital tuner 1016 and an MPEG decoder 1017.

The digital tuner 1016 receives a digital broadcasting (digital terrestrial broadcasting, BS (Broadcasting Satellite)/CS (Communications Satellite) digital broadcasting) signal via an antenna and demodulates the digital broadcasting signal so as to obtain MPEG-TS (Moving Picture Experts Group-Transport Stream). The digital tuner 1016 supplies the MPEG-TS to the MPEG decoder 1017.

The MPEG decoder 1017 descrambles the MPEG-TS supplied from the digital tuner 1016, and extracts streams containing program data to be played back (viewed). The MPEG decoder 1017 decodes audio packets forming the extracted streams and supplies the obtained audio data to the audio signal processing circuit 1022. The MPEG decoder 1017 also decodes video packets forming the streams and supplies the obtained video data to the video signal processing circuit 1018. In addition, the MPEG decoder 1017 supplies EPG (Electronic Program Guide) data extracted from the MPEG-TS to a CPU 1032 via a path (not shown).

As in the video data supplied from the video decoder 1015, the video data supplied from the MPEG decoder 1017 is subjected to predetermined processing in the video signal processing circuit 1018, and video data, etc. generated in the graphic generating circuit 1019 is superposed on the video data supplied from the video signal processing circuit 1018 as necessary. The resulting video data is then supplied to the display panel 1021 via the panel driving circuit 1020, and the image of the video data is displayed on the display panel 1021.

As in the audio data supplied from the audio A/D conversion circuit 1014, the audio data supplied from the MPEG decoder 1017 is subjected to predetermined processing in the audio signal processing circuit 1022, and is supplied to the audio amplifier circuit 1024 via the echo-cancellation/audio-synthesize circuit 1023. In the audio amplifier circuit 1024, D/A conversion processing and amplifying processing are performed on the audio data. As a result, sound whose volume is adjusted to a predetermined volume is output from the speaker 1025.

The television receiver 1000 also includes a microphone 1026 and an A/D conversion circuit 1027.

The A/D conversion circuit 1027 receives an audio signal representing a user voice incorporated by the microphone 1026, which is used for voice conversation, provided for the television receiver 1000, and performs A/D conversion processing on the received audio signal. Then, the A/D conversion circuit 1027 supplies the obtained digital audio data to the echo-cancellation/audio-synthesize circuit 1023.

Upon receiving audio data of a user (user A) using the television receiver 1000 from the A/D conversion circuit 1027, the echo-cancellation/audio-synthesize circuit 1023 performs echo cancellation on the audio data of the user A, and synthesizes the audio data with another audio data. The echo-cancellation/audio-synthesize circuit 1023 outputs the resulting audio data to the speaker 1025 via the audio amplifier circuit 1024.

Further, the television receiver 1000 includes an audio codec 1028, an internal bus 1029, an SDRAM (Synchronous Dynamic Random Access Memory) 1030, a flash memory 1031, the CPU 1032, a USB (Universal Serial Bus) I/F 1033, and a network I/F 1034.

The A/D conversion circuit 1027 receives a signal representing a user voice incorporated by the microphone 1026, which is used for voice conversation, provided for the television receiver 1000, performs A/D conversion processing on the received audio signal, and supplies the obtained digital audio data to the audio codec 1028.

The audio codec 1028 converts the audio data supplied from the A/D conversion circuit 1027 into data having a predetermined format to be sent via a network, and supplies the data to the network I/F 1034 via the internal bus 1029.

The network I/F 1034 is connected to a network through a cable attached to a network terminal 1035. The network I/F 1034 sends the audio data supplied from the audio codec 1028 to, for example, another device that is connected to that network. Additionally, the network I/F 1034 receives via the network terminal 1035, for example, audio data sent from another device that is connected to the network I/F 1034 via a network, and supplies the received audio data to the audio codec 1028 via the internal bus 1029.

The audio codec 1028 converts the audio data supplied from the network I/F 1034 into data having a predetermined format, and supplies the audio data to the echo-cancellation/audio-synthesize circuit 1023.

The echo-cancellation/audio-synthesize circuit 1023 performs echo cancellation on the audio data supplied from the audio codec 1028, and synthesizes the audio data with another audio data. The echo-cancellation/audio-synthesize circuit 1023 then outputs the resulting audio data to the speaker 1025 via the audio amplifier circuit 1024.

The SDRAM 1030 stores various data necessary for the CPU 1032 to execute processing.

The flash memory 1031 stores programs executed by the CPU 1032. The programs stored in the flash memory 1031 are read out by the CPU 1032 at a predetermined time, for example, when the television receiver 1000 is started. In the flash memory 1031, EPG data obtained via digital broadcasting and data obtained from a predetermined server via a network are also stored.

In the flash memory 1031, for example, MPEG-TS including content data obtained from a predetermined server via a network under the control of the CPU 1032, is stored. The flash memory 1031 supplies the MPEG-TS to the MPEG decoder 1017 via the internal bus 1029, for example, under the control of the CPU 1032.

The television receiver 1000 also include a light-receiving unit 1037 that receives infrared signals transmitted from a remote controller 1051.

The light receiving unit 1037 receives infrared rays from the remote controller 1051, and outputs control code, obtained by as a result of demodulation, representing the content of a user operation to the CPU 1032.

The CPU 1032 executes a program stored in the flash memory 1031 so as to control the overall operation of the television receiver 1000 in accordance with, for example, the control code supplied from the light receiving unit 1037. The CPU 1032 and the elements of the television receiver 1000 are connected to each other via a path, which is not shown.

The USB I/F 1033 sends and receives data to and from external devices connected to the television receiver 1000 through a USB cable attached to a USB terminal 1036. The network I/F 1034 is connected to a network through a cable attached to the network terminal 1035 so as to send and receive data other than audio data to and from various devices connected to the network.

An MPEG-TS that corresponds to the television receiver 1000 sent from a broadcasting station, etc. is encoded by the image encoding apparatus 40. This can reduce the load of encoding processing.

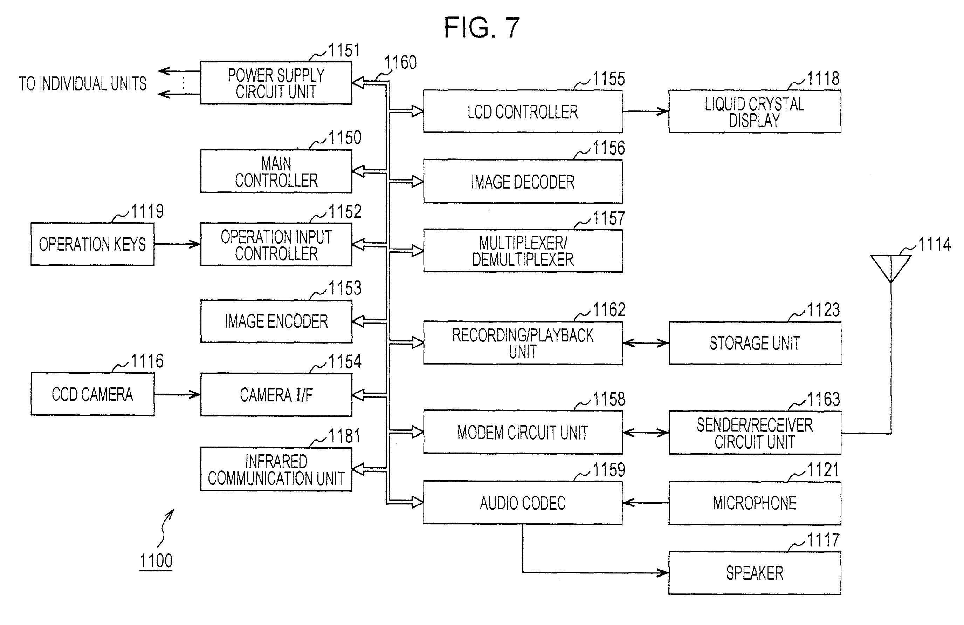

Fig. 7 is a block diagram illustrating an example of the major configuration of a cellular telephone using the image encoding apparatus to which the present invention is applied.

A cellular telephone 1100 shown in Fig. 7 includes a main controller 1150 that controls individual elements, a power supply circuit unit 1151, an operation input controller 1152, an image encoder 1153, a camera I/F 1154, an LCD controller 1155, an image decoder 1156, a multiplexer/demultiplexer 1157, a recording/playback unit 1162, a modem circuit unit 1158, and an audio codec 1159. These elements are connected to each other via a bus 1160.

The cellular telephone 1100 also includes operation keys 1119, a CCD (Charge Coupled Devices) camera 1116, a liquid crystal display 1118, a storage unit 1123, a sender/receiver circuit unit 1163, an antenna 1114, a microphone 1121, and a speaker 1117.

When the conversation is over or the power key is turned ON by a user operation, the power supply circuit unit 1151 supplies power to the individual elements from a battery pack, thereby rendering the cellular telephone 1100 operable.

The cellular telephone 1100 performs various operations, such as sending and receiving of audio signals, sending and receiving of e-mail or image data, image-capturing, and data recording, in various modes, such as a voice conversation mode and a data communication mode, under the control of the main controller 1150, which is formed of a CPU, a ROM, a RAM, etc.

For example, in the voice conversation mode, the cellular telephone 1100 converts an audio signal of voice collected by the microphone 1121 into digital audio data by using the audio codec 1159. The cellular telephone 1100 performs spread spectrum processing on the digital audio signal by using the modem circuit unit 1158, and performs digital-to-analog conversion processing and frequency conversion processing on the digital audio signal by using the sender/receiver circuit unit 1163. The cellular telephone 1100 transmits a sending signal obtained by the above-described conversion processing to a base station, which is not shown, via the antenna 1114. The sending signal (audio signal) transmitted to the base station is supplied to a cellular telephone of the other communication party via a public switched telephone network.

Also, for example, in the voice conversation mode, the cellular telephone 1100 amplifies a received signal received by the antenna 1114 and further performs frequency conversion processing and analog-to-digital conversion processing on the received signal by using the sender/receiver circuit unit 1163. The cellular telephone 1100 performs inverse spread spectrum processing by using the modem circuit unit 1158, and converts the received signal into an analog audio signal by using the audio codec 1159. The cellular telephone 1100 outputs the analog audio signal obtained as a result of the above-described conversion from the speaker 1117.

Further, for example, when sending e-mail in the data communication mode, the cellular telephone 1100 receives by the operation input controller 1152 e-mail text data input through the operation of the operation keys 1119. The cellular telephone 1100 processes the text data by using the main controller 1150, and displays the text data on the liquid crystal display 1118 as an image via the LCD controller 1155.

The cellular telephone 1100 also generates e-mail data by using the main controller 1150 on the basis of text data or a user instruction received by the operation input controller 1152. The cellular telephone 1100 performs spread spectrum processing on the e-mail data by using the modem circuit unit 1158, and performs digital-to-analog conversion processing and frequency conversion processing by using the sender/receiver circuit unit 1163. The cellular telephone 1100 transmits the sending signal obtained by the above-described conversion processing to a base station, which is not shown, via the antenna 1114. The sending signal (e-mail) transmitted to the base station is supplied to a predetermined address via a network, a mail server, etc.

Also, for example, when receiving e-mail in the data communication mode, the cellular telephone 1100 receives a signal transmitted from the base station by using the sender/receiver circuit unit 1163 via the antenna 1114, amplifies the signal, and performs frequency conversion processing and analog-to-digital conversion processing on the signal by using the sender/receiver circuit unit 1163. The cellular telephone 1100 performs inverse spread spectrum processing on the received signal by using the modem circuit unit 1158 so as to reconstruct the original e-mail data. The cellular telephone 1100 displays the reconstructed e-mail data on the liquid crystal display 1118 via the LCD controller 1155.

The cellular telephone 1100 may record (store) the received e-mail data in the storage unit 1123 via the recording/playback unit 1162.

This storage unit 1123 is a certain rewritable storage medium. The storage unit 1123 may be a semiconductor memory, such as a RAM or a built-in flash memory, a hard disk, a magnetic disk, a magneto-optical disk, an optical disc, a USB memory, or a removable medium, such as a memory card.

Of course, the storage unit 1123 may be a storage medium other than those described above.

Further, for example, when sending image data in the data communication mode, the cellular telephone 1100 generates image data by performing image-capturing using the CCD camera 1116. The CCD camera 1116 has optical devices, such as a lens and a diaphragm, and a CCD, which serves as a photoelectric conversion device. The CCD camera 1116 captures an image of a subject and converts the intensity of the received light into an electric signal so as to generate image data of the subject image. The CCD camera 1116 encodes the image data by using the image encoder 1153 via the camera I/F 1154 so as to convert the image data into encoded image data.

The cellular telephone 1100 uses the above-described image encoding apparatus 40 as the image encoder 1153 that performs the above-described processing. As in the case of the image encoding apparatus 40, by focusing the fact that the filter coefficients calculated for frames positioned close to each other on the time axis are similar (having high correlation), when performing inter-prediction, the image encoder 1053 stores the filter coefficient calculated in the past for a filter having a close positional relationship (first pass), and reuses the stored filter coefficient (second pass). This makes it possible for the image encoder 1053 to omit the calculation for a filter coefficient in the first pass (the filter coefficient can be calculated only by the second pass).

The cellular telephone 1100 performs analog-to-digital conversion by using the audio codec 1159 on sound collected by the microphone 1121 while capturing an image by using the CCD camera 1116, and further encodes the sound.

The cellular telephone 1100 combines the encoded image data supplied from the image encoder 1153 with the digital audio data supplied from the audio codec 1159 by using the multiplexer/demultiplexer 1157 according to a predetermined method. The cellular telephone 1100 performs spread spectrum processing on the resulting multiplexed data by using the modem circuit unit 1158, and performs digital-to-analog conversion processing and frequency conversion processing on the multiplexed data by using the sender/receiver circuit unit 1163. The cellular telephone 1100 transmits the sending signal obtained as a result of the above-described conversion processing to a base station, which is not shown, via the antenna 1114. The sending signal (image data) transmitted to the base station is supplied to the other communication party via, for example, a network.

If image data is not sent, the cellular telephone 1100 may display the image data generated by the CCD camera 1116 on the liquid crystal display 1118 via the LCD controller 1155 without using the image encoder 1153.

Also, for example, in the data communication mode, when receiving data of a moving image file linked to a simple homepage, etc., the cellular telephone 1100 receives a signal transmitted from a base station by using the sender/receiver circuit unit 1163 via the antenna 1114, amplifies the received signal, and performs frequency conversion processing and analog-to-digital conversion processing by using the sender/receiver circuit unit 1163. The cellular telephone 1100 performs inverse spread spectrum on the received signal by using the modem circuit unit 1158 so as to reconstruct the original multiplexed data. The cellular telephone 1100 separates the multiplexed data by using the multiplexer/demultiplexer 1157 into encoded image data and audio data.

The cellular telephone 1100 decodes the encoded image data by using the image decoder 1156 so as to generate playback moving image data, and displays the playback moving image data on the liquid crystal display 1118 via the LCD controller 1155. With this operation, moving image data contained in the moving image file linked to a simple homepage, etc. is displayed on the liquid crystal display 1118.

At the same time, the cellular telephone 1100 converts digital audio data into an analog audio signal by using the audio codec 1159, and outputs the analog audio signal from the speaker 1117. With this operation, audio data contained in a moving image file linked to a simple homepage, etc. is played back.

As in the case of e-mail, the cellular telephone 1100 may record (store) the received data linked to a simple homepage, etc. on the storage unit 1123 via the recording/playback unit 1162.

Also, the cellular telephone 1100 may analyze two-dimensional code obtained as a result of image-capturing of the CCD camera 1116 by using the main controller 1150 so as to obtain information recorded on the two-dimensional code.

Further, the cellular telephone 1100 may communicate with external devices through infrared by using an infrared communication unit 1181.

The cellular telephone 1100 uses the image encoding apparatus 40 as the image encoder 1153, whereby the number of calculations for the motion vector with a fraction precision, which requires relatively a large amount of calculation, is restricted to only once. As a result, the cellular telephone 1100 can reduce the load of encoding processing, for example, when encoding and transmitting image data generated in the CCD camera 1116.

In the foregoing description, the cellular telephone 1100 uses the CCD camera 1116. However, instead of this CCD camera 1116, an image sensor using CMOS (Complementary Metal Oxide Semiconductor) (CMOS image sensor) may be used. In this case, too, the cellular telephone 1100 can capture an image of a subject so as to generate image data of the subject image, as in the case of the CCD camera 1116.

In the foregoing description, the cellular telephone 1100 has been described as an example using the present invention. However, as in the case of the cellular telephone 1100, the image encoding apparatus 40 may be applied to any apparatus having an image capturing function and a communication function similar to those of the cellular telephone 1100, such as a PDA (Personal Digital Assistants), a smartphone, a UMPC (Ultra Mobile Personal Computer), a netbook, or a notebook personal computer.

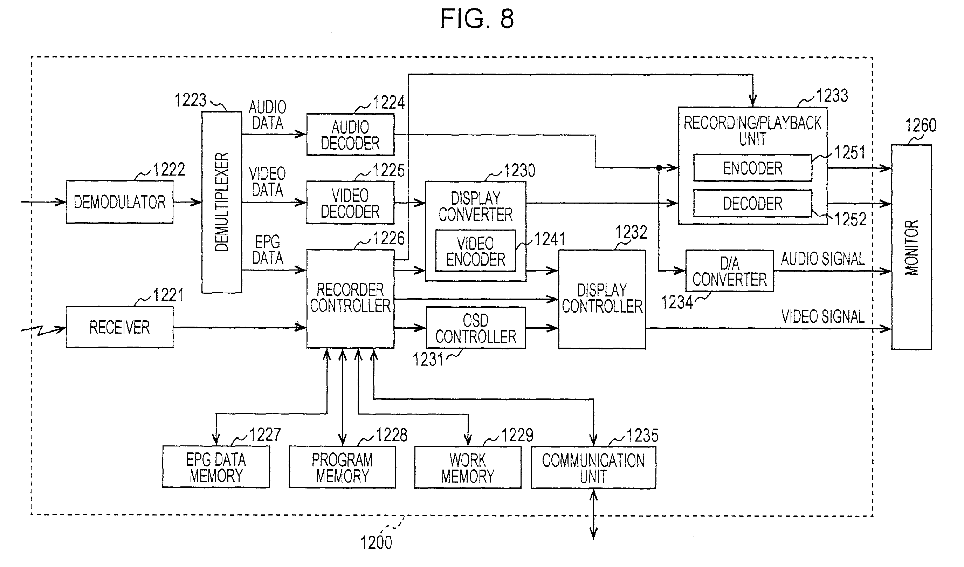

Fig. 8 is a block diagram illustrating an example of the major configuration of a hard disk recorder using an image encoding apparatus to which the present invention is applied.

A hard disk recorder (HDD recorder) 1200 shown in Fig. 8 is an apparatus that stores, in a built-in hard disk, audio data and video data of a broadcast program contained in a broadcasting signal (television signal) transmitted by a satellite or terrestrial antenna, etc., and received by a tuner, and that provides the stored data to a user at a time according to an instruction from the user.

The hard disk recorder 1200 can extract, for example, audio data and video data, from a broadcasting signal so as to decode the audio data and the video data when necessary, and stores the audio data and the video data in the built-in hard disk. The hard disk recorder 1200 can also obtain audio data and video data from another device via, for example, a network, so as to decode the audio data and the video data when necessary, and stores the audio data and the video data in the built-in hard disk.

Further, the hard disk recorder 1200 can decode audio data and video data recorded in, for example, the built-in hard disk, and supplies the audio data and the video data to a monitor 1260. The hard disk recorder 1200 displays the image of the video data on the screen of the monitor 1260, and outputs the sound of the audio data from the speaker of the monitor 1260. Also, the hard disk recorder 1200 can decode audio data and video data extracted from a broadcasting signal obtained via a tuner, or decodes audio data and video data obtained from another device via a network, and supplies the audio data and the video data to the monitor 1260. The hard disk recorder 1200 displays the image of the video data on the screen of the monitor 1260 and outputs the sound of the audio data from the speaker of the monitor 1260.

Of course, operations other than the above-described operations can be performed.

The hard disk recorder 1200 includes, as shown in Fig. 8, a receiver 1221, a demodulator 1222, a demultiplexer 1223, an audio decoder 1224, a video decoder 1225, and a recorder controller 1226. The hard disk recorder 1200 also includes an EPG data memory 1227, a program memory 1228, a work memory 1229, a display converter 1230, an OSD (On Screen Display) controller 1231, a display controller 1232, a recording/playback unit 1233, a D/A converter 1234, and a communication unit 1235.

Also, the display converter 1230 includes a video encoder 1241. The recording/playback unit 1233 includes an encoder 1251 and a decoder 1252.

The receiver 1221 receives an infrared signal from a remote controller (not shown) and converts the infrared signal into an electric signal so as to output the electric signal to the recorder controller 1226. The recorder controller 1226 is formed of, for example, a microprocessor, and executes various operations in accordance with a program stored in the program memory 1228. In this case, the recorder controller 1229 uses the work memory 1229 if necessary.

The communication unit 1235 is connected to a network so as to communicate with another device via the network. For example, under the control of the recorder controller 1226, the communication unit 1235 communicates with a tuner (not shown) and outputs a channel-selection control signal mainly to the tuner.

The demodulator 1222 demodulates a signal supplied from the tuner and outputs the signal to the demultiplexer 1223. The demultiplexer 1223 separates the data supplied from the demodulator 1222 into audio data, video data, and EPG data, and outputs the audio data, video data, and EPG data to the audio decoder 1224, the video decoder 1225, and the recorder controller 1226, respectively.

The audio decoder 1224 decodes the input audio data and outputs the data to the recording/playback unit 1223. The video decoder 1225 decodes the input video data and outputs the data to the display converter 1230. The recorder controller 1226 supplies the input EPG data to the EPG data memory 1227 and allows the EPG memory 1227 to store the EPG data therein.

The display converter 1230 encodes the video data supplied from the video decoder 1225 or the recorder controller 1226 into, for example, NTSC (National Television Standards Committee) video data, by using the video encoder 1241, and outputs the video data to the recording/playback unit 1233. The display converter 1230 also converts the size of the video data supplied from the video decoder 1225 or the recorder controller 1226 into a monitor size that matches the size of the monitor 1260. The display converter 1230 then converts the video data into NTSC video data and converts the data into an analog signal by using the video encoder 1241, and outputs the analog signal to the display controller 1232.

The display controller 1232 superposes an OSD signal output from the OSD (On Screen Display) controller 1231 on the video signal received from the display converter 1230 under the control of the recorder controller 1226. The display controller 1232 outputs the superposed signal to the display of the monitor 1260 and displays the superposed signal on the display.

An analog signal converted from audio data output from the audio decoder 1224 by the D/A converter 1234 is also supplied to the monitor 1260. The monitor 1260 outputs this audio signal from a built-in speaker.

The recording/playback unit 1233 has a hard disk as a storage medium that records video data, audio data, etc. therein.

The recording/playback unit 1233 encodes, for example, audio data supplied from the audio decoder 1224, by using the encoder 1251. The recording/playback unit 1233 also encodes video data supplied from the video encoder 1241 of the display converter 1230 by using the encoder 1251. The recording/playback unit 1233 combines the encoded data of the audio data with the encoded data of the video data by using a multiplexer. The recording/playback unit 1233 performs channel coding on the multiplexed data so as to amplify the data, and writes the multiplexed data into the hard disk via a recording head.

The recording/playback unit 1233 plays back data recorded on the hard disk via a playback head, amplifies the data, and separates the data into audio data and video data by using a demultiplexer. The recording/playback unit 1233 decodes the audio data and the video data by using the decoder 1252. The recording/playback unit 1233 performs D/A conversion on the decoded audio data and outputs the audio data to the speaker of the monitor 1260. The recording/playback unit 1233 also performs D/A conversion on the decoded video data and outputs the video data to the display of the monitor 1260.

The recorder controller 1226 reads out the latest EPG data from the EPG data memory 1227 on the basis of a user instruction represented by an infrared signal received from a remote controller by the receiver 1221, and supplies the latest EPG data to the OSD controller 1231. The OSD controller 1231 generates image data corresponding to the input EPG data and outputs the image data to the display controller 1232. The display controller 1232 outputs the video data received from the OSD controller 1231 to the display of the monitor 1260, and displays the video data on the display. With this operation, EPG (Electronic Program Guide) is displayed on the display of the monitor 1260.

The hard disk recorder 1200 can also obtain various data, such as video data, audio data, and EPG data, supplied from other devices via a network, such as the Internet.

Under the control of the recorder controller 1226, the communication unit 1235 obtains encoded data, such as video data, audio data, and EPG data, sent from other devices via a network, and supplies the obtained data to the recorder controller 1226. The recorder controller 1226 supplies the obtained encoded data, such as video data and audio data, to the recording/playback unit 1233, and allows the recording/playback unit 1233 to store the encoded data in the hard disk. In this case, the recorder controller 1226 and the recording/playback unit 1233 may perform processing, such as re-encoding, if necessary.

The recorder controller 1226 decodes obtained encoded data, such as video data and audio data, and supplies the obtained video data to the display converter 1230. In a manner similar to video data supplied from the video decoder 1225, the display converter 1230 processes video data supplied from the recorder controller 1226 and supplies the video data to the monitor 1260 via the display controller 1232, thereby allowing the monitor 1260 to display the video data.

Also, in combination with the display of images, the recorder controller 1226 may supply decoded audio data to the monitor 1260 via the D/A converter 1234, and may allow the monitor 1260 to output the sound from the speaker.

Further, the recorder controller 1226 decodes the encoded data of the obtained EPG data and supplies the decoded EPG data to the EPG data memory 1227.

The hard disk recorder 1200 described above uses the image encoding apparatus 40 as the encoder 1251. As in the case of the image encoding apparatus 40, by focusing the fact that the filter coefficients calculated for frames positioned close to each other on the time axis are similar (having high correlation), when performing inter-prediction, the encoder 1251 stores the filter coefficient calculated in the past for a filter having a close positional relationship (first pass), and reuses the stored filter coefficient (second pass). This makes it possible for the encoder 1251 to omit the calculation for a filter coefficient in the first pass (the filter coefficient can be calculated only by the second pass).

As a result, the hard disk recorder 1200 can reduce the load of encoding processing, for example, when recording encoded data on a hard disk.

The hard disk recorder 1200 that records video data or audio data in the hard disk has been described as an example using the present invention. However, of course, any type of recording medium may be used. For example, a recorder using a recording medium other than a hard disk, such as a flash memory, an optical disc, or a video tape, may be used. In this case, too, as in the case of the above-described hard disk recorder 1200, the image encoding apparatus 40 is applicable to such a recorder.

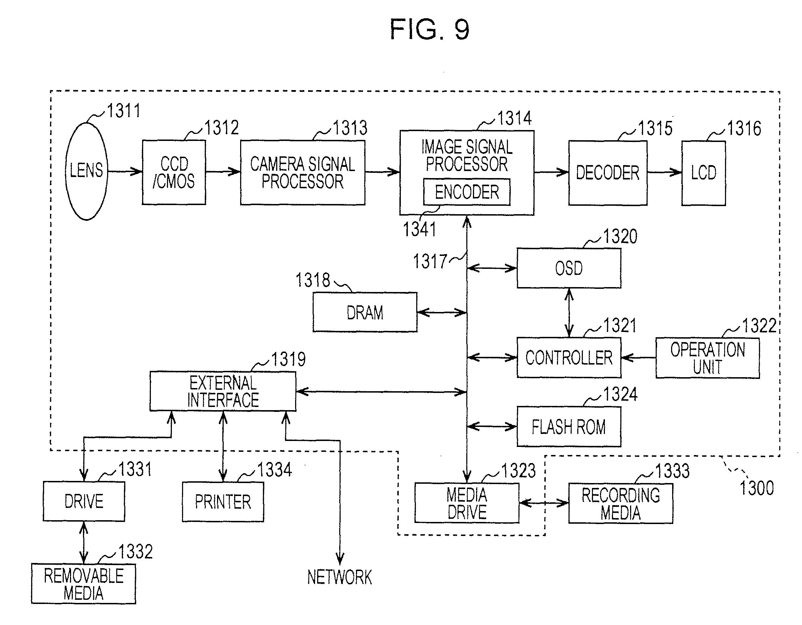

Fig. 9 is a block diagram illustrating an example of the major configuration of a camera using an image encoding apparatus to which the present invention is applied.

A camera 1300 shown in Fig. 9 captures an image of a subject, and displays the image of the subject on an LCD 1316 or records the image of the subject on recording media 1333 as image data.

A lens block 1311 allows light (i.e., an image of a subject) to be incident on a CCD/CMOS 1312. The CCD/CMOS 1312, which is an image sensor using a CCD or a CMOS, converts the intensity of the received light into an electric signal and supplies the electric signal to a camera signal processor 1313.

The camera signal processor 1313 converts the electric signal supplied from the CCD/CMOS 1312 into color difference signals Y, Cr, Cb, and supplies the color difference signals to an image signal processor 1314. Under the control of a controller 1321, the image signal processor 1314 performs predetermined image processing on the image signals supplied form the camera signal processor 1313 and encodes the image signals by using an encoder 1341. The image signal processor 1314 supplies the encoded data obtained by encoding the image signals to a decoder 1315. Further, the image signal processor 1314 obtains display data generated by an on screen display (OSD) 1320 and supplies the display data to the decoder 1315.

In the above-described processing, if necessary, the camera signal processor 1313 utilizes a DRAM (Dynamic Random Access Memory) 1318 that is connected to the camera signal processor 1313 via a bus 1317, and stores image data or encoded data obtained by encoding that image data, etc. in the DRAM 1318 if necessary.

The decoder 1315 decodes the encoded data supplied form the image signal processor 1314 and supplies the obtained image data (decoded image data) to the LCD 1316. The decoder 1315 also supplies the display data supplied from the image signal processor 1314 to the LCD 1316. The LCD 1316 suitably combines the image of the decoded image data with the image of the display data supplied from the decoder 1315, and displays the synthesized image.

The on screen display 1320 outputs menu screens including signs, characters, graphics, etc., or display data, such as icons, to the image signal processor 1314 via the bus 1317 under the control of the controller 1321.

The controller 1321 executes various operations on the basis of a signal representing the content of a command given by a user using an operation unit 1322, and also controls the image signal processor 1314, the DRAM 1318, an external interface 1319, the on screen display 1320, a media drive 1323, etc. via the bus 1317. In a FLASH ROM 1324, programs, data, etc. necessary for the controller 1321 to execute various operations are stored.

For example, in place of the image signal processor 1314 or the decoder 1315, the controller 1321 can encode image data stored in the DRAM 1318 or decode encoded data stored in the DRAM 1318. In this case, the controller 1321 may perform encoding and decoding processing according to methods similar to the encoding method and the decoding method employed in the image signal processor 1314 and the decoder 1315, respectively. Alternatively, the controller 1321 may perform encoding and decoding processing according to methods that are not supported by the image signal processor 1314 or the decoder 1315.

Also, for example, when an instruction to start printing an image is given from the operation unit 1322, the controller 1321 reads image data from the DRAM 1318 and supplies the image data to a printer 1334 that is connected to the external interface 1319 via the bus 1317, thereby allowing the printer 1334 to print the image data.

Further, for example, when an instruction to record an image is given from the operation unit 1322, the controller 1321 reads encoded data from the DRAM 1318 and supplies the encoded data to the recording media 1333 that are attached to the media drive 1323 via the bus 1317, thereby allowing the recording media 1333 to store the encoded data therein.

The recording media 1333 are arbitrary rewritable removable media, such as magnetic disks, magneto-optical disks, optical discs, semiconductor memories, or the like. Of course, any types of removable media may be used as the recoding media 1333, for example, tape devices, disks, or memory cards may be used. Of course, for example, noncontact IC cards may be used.

Alternatively, the media drive 1323 and the recording media 1333 may be integrated, and non-portable recording media, for example, a built-in hard disk drive or an SSD (Solid State Drive), may be used.

The external interface 1319 is formed of, for example, a USB input/output terminal, and is connected to the printer 1334 when printing images. A drive 1331 is connected to the external interface 1319 if necessary, and removable media 1332, such as magnetic disks, optical discs, magneto-optical disks, etc. are attached to the drive 1331 when necessary. A computer program read from the removable media 1332 is installed in the FLASH ROM 1324 if necessary.

Further, the external interface 1319 has a network interface connected to a predetermined network, such as a LAN or the Internet. In response to an instruction from the operation unit 1322, the controller 1321 reads encoded data from the DRAM 1318 and supplies the encoded data from the external interface 1319 to another device connected to the external interface 1319 via a network. The controller 1321 can also obtain via the external interface 1319 encoded data or image data supplied from another device via a network, and stores the data in the DRAM 1318 or supplies the data to the image signal processor 1314.

The camera 1300 described above uses the image encoding apparatus 40 as the encoder 1341. As in the case of the image encoding apparatus 40, by focusing the fact that the filter coefficients calculated for frames positioned close to each other on the time axis are similar (having high correlation), when performing inter-prediction, the encoder 1341 stores the filter coefficient calculated in the past for a filter having a close positional relationship (first pass), and reuses the stored filter coefficient (second pass). This makes it possible for the encoder 1341 to omit the calculation for a filter coefficient in the first pass (the filter coefficient can be calculated only by the second pass).

Thus, the camera 1300 can reduce the load of encoding processing when, for example, recording encoded data on the DRAM 1318 or the recording media 1333 or when, for example, providing encoded data to another device.

Note that an encoding method employed in the image encoding apparatus 40 may be applied to encoding processing performed by the controller 1321.

Image data captured by the camera 1300 may be moving images or still images.

Of course, the image encoding apparatus 40 may be applicable to apparatuses or systems other than the above-described apparatuses.

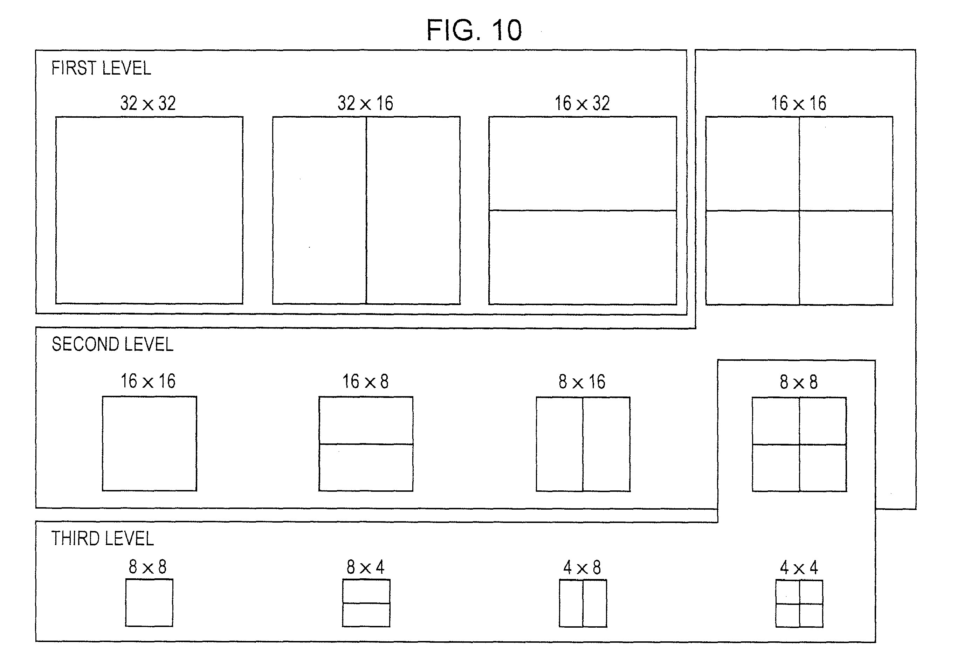

Also, the size of a macroblock is arbitrary. The present invention may be applicable to any size of macroblock, such as those shown in Fig. 10. For example, the present invention can be applied, not only to normal 16×16-pixel macroblocks, but also to extended macroblocks, such as 32×32-pixel macroblocks.

In Fig. 10, in the top section, 32×32-pixel macroblocks, which are divided into blocks (partitions) of 32×32 pixels, 32×16 pixels, 16×32 pixels, and 16×16 pixels, are sequentially shown from the left in that order. Also, in the middle section, 16×16-pixel macroblocks, which are divided into blocks of 16×16 pixels, 16×8 pixels, 8×16 pixels, and 8×8 pixels, are sequentially shown from the left in that order. Further, in the bottom section, 8×8-pixel macroblocks, which are divided into blocks of 8×8 pixels, 8×4 pixels, 4×8 pixels, and 4×4 pixels, are sequentially shown from the left in that order.

That is, a 32×32-pixel macroblock may be processed in the blocks of 32×32 pixels, 32×16 pixels, 16×32 pixels, and 16×16 pixels shown in the top section.

The 16×16-pixel macroblock shown at the right side of the top section can be processed in the blocks of 16×16 pixels, 16×8 pixels, 8×16 pixels, and 8×8 pixels shown in the middle section, as in the H.264/AVC method.

The 8×8-pixel macroblock shown at the right side of the middle section can be processed in the blocks of 8×8 pixels, 8×4 pixels, 4×8 pixels, and 4×4 pixels shown in the bottom section, as in the H.264/AVC method.

These blocks can be classified into the following three levels. That is, the blocks of 32×32 pixels, 32×16 pixels, and 16×32 pixels shown in the top section of Fig. 10 are referred to as a first level. The block of 16×16 pixels shown at the right side of the top section and the blocks of 16×16 pixels, 16×8 pixels, and 8×16 pixels shown in the middle section are referred to as a second level. The block of 8×8 pixels shown at the right side of the middle section and the blocks of 8×8 pixels, 8×4 pixels, 4×8 pixels, and 4×4 pixels shown in the bottom section are referred to as a third level.

With such a hierarchical structure, for 16×16-pixel blocks and blocks having smaller pixels, blocks having a larger size can be defined as a superset while maintaining compatibility with the H.264/AVC method.

For example, the image encoding apparatus 40 may calculate a filter coefficient for each level. Also, for example, the image encoding apparatus 40 may set, for the second level, the same filter coefficient as that for the first level, whose block size is larger than that of the second level. Further, for example, the image encoding apparatus 40 may set the same filter coefficient used in the past for the same level.

As in the first or second level, macroblocks that are encoded by using a relatively large block size are less likely to contain high frequency components. In contrast, as in the third level, macroblocks that are encoded by using a relatively small block size are more likely to contain high frequency components.

Accordingly, filter coefficients are calculated separately for the individual levels having different block sizes, thereby making it possible to improve the performance of encoding which is suitable for the local characteristics of an image.

The number of taps of the filter may be varied according to the level.

Reference Signs List

40 image encoding apparatus, 41 motion-prediction/compensation unit, 42 AIF, 43 motion vector calculator, 44 coefficient calculator, 45 filter coefficient memory

**Claims**

1. An image processing apparatus for performing inter-prediction processing on an encoding target image, the image processing apparatus comprising:

   selection means for selecting a filter coefficient of an interpolation filter calculated based on a motion vector obtained by being calculated by using a result of interpolation performed by the interpolation filter, the interpolation filter interpolating, with a fraction precision, pixels of the encoding target image and pixels of a prediction image used for the inter-prediction processing;
   motion vector calculation means for calculating a motion vector of the encoding target image by using a result of interpolation performed by the interpolation filter using the filter coefficient selected by the selection means; and
   coefficient calculation means for calculating a filter coefficient of the interpolation filter for the encoding target image by using the motion vector calculated by the motion vector calculation means.

2. The image processing apparatus according to Claim 1, wherein the selection means selects the filter coefficient in accordance with a positional relationship between the encoding target image and the prediction image.

3. The image processing apparatus according to Claim 2, wherein the selection means selects the filter coefficient for an image which is positioned temporally closest to the encoding target image.

4. The image processing apparatus according to Claim 1, wherein the selection means selects the filter coefficient in accordance with the type of picture of the encoding target image or the prediction image.

5. The image processing apparatus according to Claim 1, further comprising storage means for storing the filter coefficient of the interpolation filter calculated based on the motion vector obtained by being calculated by using a result of interpolation performed by the interpolation filter, the interpolation filter interpolating, with a fraction precision, the pixels of the encoding target image and the pixels of the prediction image used for the inter-prediction processing, wherein the selection means selects the filter coefficient stored in the storage means.

6. An image processing method for an image processing apparatus for performing inter-prediction processing on an encoding target image, the image processing method comprising:

selecting a filter coefficient of an interpolation filter calculated based on a motion vector obtained by being calculated by using a result of interpolation performed by the interpolation filter, the interpolation filter interpolating, with a fraction precision, pixels of the encoding target image and pixels of a prediction image used for the inter-prediction processing;
calculating a motion vector of the encoding target image by using a result of interpolation performed by the interpolation filter using the selected filter coefficient; and
calculating a filter coefficient of the interpolation filter for the encoding target image by using the calculated motion vector.

FIG. 1

INPUT IMAGE → A/D (11) → IMAGE REARRANGEMENT BUFFER (12) → (+) (13) → ORTHOGONAL TRANSFORMER (14) → QUANTIZATION UNIT (15) → LOSSLESS ENCODER (16) → STORAGE BUFFER (17) → IMAGE COMPRESSION INFORMATION

RATE CONTROLLER (25)

INVERSE QUANTIZATION UNIT (18) → INVERSE ORTHOGONAL TRANSFORMER (19) → (+) (20) → DEBLOCKING FILTER (21) → FRAME MEMORY (22)

MOTION-PREDICTION/COMPENSATION UNIT (24)

INTRA-PREDICTION UNIT (23)

MOTION VECTOR

10

# FIG. 2

POSITIONS OF
ACTUAL PIXELS

POSITIONS OF
INTERPOLATION PIXELS

# FIG. 3

```
  ┌─────────────────────────────────────────┐
  │  START PROCESSING FOR DETERMINING        │
  │  FILTER COEFFICIENT OF AIF AND MV        │
  └─────────────────────────────────────────┘
                     │
                     ▼
  ┌─────────────────────────────────────────┐
  │   CALCULATE MOTION VECTOR BY USING       │ S1
  │      PREDETERMINED INITIAL VALUE         │
  │         OF FILTER COEFFICIENT            │
  └─────────────────────────────────────────┘
                     │
                     ▼
  ┌─────────────────────────────────────────┐
  │     CALCULATE FILTER COEFFICIENT BY      │ S2
  │ USING CALCULATED MOTION VECTOR SO THAT   │
  │  PREDICTION ERROR BECOMES MINIMUM        │
  └─────────────────────────────────────────┘
                     │
                     ▼
  ┌─────────────────────────────────────────┐
  │   CALCULATE MOTION VECTOR BY USING       │ S3
  │      CALCULATED FILTER COEFFICIENT       │
  └─────────────────────────────────────────┘
                     │
                     ▼
       ╱─────────────────────────────╲  S4
      ╱  IS IMPROVED IMAGE QUALITY EQUAL ╲
      ╲  TO OR HIGHER THAN THRESHOLD?    ╱ NO
       ╲─────────────────────────────╱
                     │ YES
                     ▼
              ┌──────────────┐
              │     END      │
              └──────────────┘
```

## FIG. 4

EP 2 334 081 A1

# FIG. 5

```
┌─────────────────────────────────────────┐
│  START PROCESSING FOR DETERMINING        │
│   FILTER COEFFICIENT OF AIF AND MV       │
└─────────────────────────────────────────┘
                    │
                    ▼
┌──────────────────────────────────────────┐ S11
│  SELECT CALCULATED FILTER COEFFICIENT     │
└──────────────────────────────────────────┘
                    │
                    ▼
┌──────────────────────────────────────────┐ S12
│      CALCULATE MOTION VECTOR BY           │
│   USING SELECTED FILTER COEFFICIENT       │
└──────────────────────────────────────────┘
                    │
                    ▼
┌──────────────────────────────────────────┐ S13
│      CALCULATE FILTER COEFFICIENT BY      │
│  USING CALCULATED MOTION VECTOR SO THAT   │
│    PREDICTION ERROR BECOMES MINIMUM       │
└──────────────────────────────────────────┘
                    │
                    ▼
              ┌──────────┐
              │   END    │
              └──────────┘
```

# FIG. 6

# FIG. 7

TO INDIVIDUAL UNITS ← POWER SUPPLY CIRCUIT UNIT ~1151

1160

LCD CONTROLLER ~1155 → LIQUID CRYSTAL DISPLAY ~1118

MAIN CONTROLLER ~1150

IMAGE DECODER ~1156

OPERATION KEYS ~1119 → OPERATION INPUT CONTROLLER ~1152

MULTIPLEXER/ DEMULTIPLEXER ~1157

~1114

IMAGE ENCODER ~1153

RECORDING/PLAYBACK UNIT ~1162 ↔ STORAGE UNIT ~1123

CCD CAMERA ~1116 → CAMERA I/F ~1154

MODEM CIRCUIT UNIT ~1158 ↔ SENDER/RECEIVER CIRCUIT UNIT ~1163

INFRARED COMMUNICATION UNIT ~1181

AUDIO CODEC ~1159 ← MICROPHONE ~1121

1100

SPEAKER ~1117

EP 2 334 081 A1

# FIG. 8

EP 2 334 081 A1

# FIG. 9

# FIG. 10

EP 2 334 081 A1

**FIRST LEVEL**

32 × 32

32 × 16

16 × 32

16 × 16

**SECOND LEVEL**

16 × 16

16 × 8

8 × 16

8 × 8

**THIRD LEVEL**

8 × 8

8 × 4

4 × 8

4 × 4

**INTERNATIONAL SEARCH REPORT**

| | International application No. |
|---|---|
| | PCT/JP2009/067225 |

A.  CLASSIFICATION OF SUBJECT MATTER
*H04N7/32*(2006.01)i

According to International Patent Classification (IPC) or to both national classification and IPC

B.  FIELDS SEARCHED

Minimum documentation searched (classification system followed by classification symbols)
H04N7/32

Documentation searched other than minimum documentation to the extent that such documents are included in the fields searched
| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2004-147328 A  (Docomo Communications Laboratories U.S.A. Inc.),<br>20 May 2004 (20.05.2004),<br>paragraphs [0028] to [0035], [0097]<br>& US 2004/0076333 A1 | 1-3,5-6<br>4 |
| Y | JP 2004-007337 A  (Sony Corp.),<br>08 January 2004 (08.01.2004),<br>paragraphs [0092] to [0094]<br>& US 2004/0213470 A1 | 4 |

☐  Further documents are listed in the continuation of Box C.     ☐  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 04 November, 2009 (04.11.09) | 17 November, 2009 (17.11.09) |

| Name and mailing address of the ISA/<br>Japanese Patent Office | Authorized officer |
|---|---|
| Facsimile No. | Telephone No. |

Form PCT/ISA/210 (second sheet) (April 2007)

27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Thomas Wedi ; Hans Georg Musmann.** Motion- and Aliasing-Compensated Prediction for Hybrid Video Coding. *IEEE Transactions on circuits and systems for video technology,* July 2003, vol. 13 (7

- **Yuri Vatis ; Joern Ostermann.** Prediction of P- and B-Frames Using a Two-dimensional Non-separable Adaptive Wiener Interpolation Filter for H.264/AVC. *ITU-T SG16 VCEG 30th Meeting,* October 2006